# EUROPÄISCHE PATENTSCHRIFT

(11) **EP 0 991 729 B1**
(45) Veröffentlichungstag und Bekanntmachung des Hinweises auf die Patenterteilung: **01.10.2003**
(21) Anmeldenummer: 98937457.4
(22) Anmeldetag: 09.06.1998
(51) Int. Cl.: C09D 7/12, C09D 201/06, B05D 7/16

(54) **KLARLACKÜBERZUGSMITTEL UND DEREN VERWENDUNG ZUR HERSTELLUNG VON MEHRSCHICHTLACKIERUNGEN**
TRANSPARENT COATING AGENTS AND THE USE THEREOF TO PRODUCE MULTI-LAYERED COATINGS
ENDUITS DE LAQUE TRANSPARENTE ET LEUR UTILISATION POUR LA FABRICATION DE PEINTURES MULTICOUCHES

(30) Priorität: 18.06.1997 DE 19725742
(43) Veröffentlichungstag der Anmeldung: 12.04.2000
(73) Patentinhaber: E.I. DU PONT DE NEMOURS AND COMPANY, Wilmington Delaware 19898 (US)
(72) Erfinder: BRENKE, Stephan, D-42113 Wuppertal (DE); DÖSSEL, Karl-Friedrich, D-42107 Wuppertal (DE); HERRMANN, Friedrich, D-42117 Wuppertal (DE); REIFFERSCHEIDT, Heinz-Walter, D-44803 Bochum (DE)
(74) Vertreter: Hrabal, Ulrich
(86) Internationale Anmeldenummer: EP9803463
(87) Internationale Veröffentlichungsnummer: WO98058029

(56) Entgegenhaltungen:
- EP-A- 0 192 304
- EP-A- 0 653 468
- DE-A- 4 310 413
- US-A- 4 314 925

## Beschreibung

Die Erfindung betrifft Einbrennklarlacküberzugsmittel, deren Verwendung bei der Herstellung von Mehrschichtlackierungen, insbesondere Mehrschichtlackierungen vom Basislack/Klarlack-Typ sowie ein Verfahren zur Herstellung von Mehrschichtlackierungen.

Heutige Automobilserienlackierungen bestehen meist aus einer Basislack/Klarlack-Decklackierung, die auf eine mit Vorbeschichtungen versehene Karosse aufgebracht wird. Als Einbrennklarlacke haben insbesondere solche in der Praxis Verwendung gefunden, die ein Bindemittel-Vernetzersystem auf Basis einer Kombination von hydroxyfunktionellen Bindemitteln und Aminoplastharzen aufweisen. In solchen Einbrennklarlacken liegen die hydroxyfunktionellen Bindemittel und die Aminoplastvernetzer im allgemeinen in einem 50 : 50 bis 90 : 10-Festkörpergewichtsverhältnis vor. Aus solchen Klarlacken erstellte Klarlackschichten besitzen keine ausreichende Säurebeständigkeit. Bei erhöhten Anforderungen an die Säurebeständigkeit von Klarlackschichten ist die Verwendung von Klarlacksystemen mit anderen Vemetzungsmechanismen vorzuziehen, beispielsweise die Verwendung solcher Klarlacksysteme, die unter Ausbildung von Urethangruppen oder Estergruppen oder unter C-C-Verknüpfung vernetzen.

Der optisch-ästhetische Eindruck von Basislack/Klarlack-Zweischichtlackierungen wird wesentlich durch die Qualität der Klarlackschicht beeinflußt. Im Idealfall ist die Struktur der Klarlackschicht an waagerechten und senkrechten Flächen eines dreidimensionalen Substrats, beispielsweise einer Automobilkarosse gleich. Der beschriebene Idealfall läßt sich in der Praxis jedoch nicht ohne weiteres erreichen. Beispielsweise kann es zur Ausbildung von Unterschieden in der Oberflächenstruktur oder im Verlauf der äußeren Klarlackschicht kommen, da die Klarlacke nach ihrer Applikation und insbesondere während der Aufheizphase beim Einbrennprozeß als Folge einer temperaturbedingten Viskositätsemiedrigung zum Ablaufen oder Absacken an außerhalb der Waagerechten befindlichen Flächen neigen. Diese Gefahr ist um so höher, je höher die Klarlackschichtdicke ist.

Aus DE-C 27 51 761 und EP-A-0 198 519 ist es bekannt, bestimmte Harnstoffverbindungen als Additive in Aminoplastharze als Vernetzer enthaltenden Einbrennklarlacken einzusetzen, um unerwünschten Ablauferscheinungen des Klarlacks beim Einbrennen entgegenzuwirken. Aus EP-A-0 192 304 ist es zusätzlich bekannt, Harnstoffverbindungen als Antiablaufmittel in Klarlacken einzusetzen, die hydroxyfunktionelle Bindemittel und von Aminoplastharzen unterschiedliche Vernetzer enthalten. Im Rahmen der vorliegenden Erfindung hat es sich gezeigt, daß der Einsatz von Harnstoffverbindungen in Klarlacken zu einer reduzierten Brillianz und Trübung (Milchigkeit) der eingebrannten Klarlackschichten führt. Das Trübungsphänomen wird besonders deutlich, wenn die Klarlackschichten auf dunklen Untergründen, beispielsweise Basislackschichten mit einem dunklen Farbton ausgebildet werden.

Aufgabe der Erfindung ist die Bereitstellung von Klarlacküberzugsmitteln, die im wesentlichen frei von Aldehydkondensationsharz-Vernetzern sind, die eine verminderte Ablaufneigung aufweisen und die zu einer ungetrübten, brillianten und säurefesten Klarlackschicht ausgehärtet werden können.

Die Aufgabe wird gelöst durch Klarlacküberzugsmittel, enthaltend ein oder mehrere selbstvernetzende oder fremdvernetzende Bindemittel, ein oder mehrere organische Lösemittel, im Falle von fremdvernetzenden Bindemitteln einen oder mehrere von Aldehyd-Kondensationsharzen unterschiedliche Vernetzer, sowie gegebenenfalls einen oder mehrere Reaktivverdünner, sowie gegebenenfalls für Klarlacke übliche Additive, die gekennzeichnet sind durch den zusätzlichen Gehalt von
A) 0,1 bis 3 Gew.-% einer oder mehrerer Harnstoffverbindungen und
B) 0,05 bis 10 Gew.-% einer oder mehrerer Formaldehyd liefernden Substanzen jeweils bezogen auf den durch Bindemittel und gegebenenfalls vorhandenen Reaktivverdünner und gegebenenfalls vorhandener Vernetzer gebildeten Harzfestkörper der Klarlacküberzugsmittel.

Bei den erfindungsgemäßen Klarlacküberzugsmitteln handelt es sich um thermisch härtbare, sogenannte Einbrenn-Klarlacküberzugsmittel, die z.B. bei Temperaturen von 80°C und darüber, z.B. bis zu 160°C aushärten.

Bei den erfindungsgemäßen Klarlacküberzugsmitteln handelt es sich um solche, deren Harzfestkörper sich zusammensetzt aus einem thermisch durch Additions- und/oder Kondensationsreaktionen härtbaren Bindemittel- plus gegebenenfalls Reaktivverdünner- plus gegebenenfalls Vernetzer-System, das beim Einbrennen unter Ausbildung kovalenter Bindungen chemisch vernetzt. Bei den thermisch durch Additions- und/oder Kondensationsreaktionen härtbaren Systemen handelt es sich um Bindemittel, welchen gegebenenfalls Reaktivverdünner (Verbindungen, die beim Einbrennvorgang in den Lackfilm chemisch eingebaut werden) und gegebenenfalls Vernetzer für Klarlacküberzugsmittel zugemischt sind, bevorzugt für solche Klarlacküberzugsmittel, wie sie bei der Herstellung von Basislack/Klarlack-Zweischichtlackierungen eingesetzt werden können und beispielsweise aus einer Vielzahl von Patentdokumenten bekannt sind.

Die erfindungsgemäßen Klarlacküberzugsmittel sind flüssig. Sie enthalten organische Lösemittel und ein oder mehrere übliche filmbildende Bindemittel, gegebenenfalls zusätzlich ein oder mehrere Reaktivverdünner sowie, falls die Bindemittel nicht selbstvernetzend sind, einen oder mehrere Vernetzer. Sowohl die Bindemittel als auch die Vernetzer unterliegen prinzipiell keinerlei Beschränkung, jedoch sind solche Systeme ausgeschlossen, deren chemische Vernetzung zu einem wesentlichen Anteil durch Aldehyd-Kondensationsharze erfolgt, d.h. die erfindungsgemäßen Klarlacküberzugsmittel sind im wesentlichen oder vollständig frei von Aldehyd-Kondensationsharzen. Insbesondere enthalten die erfindungsgemäßen Klarlacküberzugsmittel bezogen auf ihren Harzfestkörpergehalt weniger als 5, bevorzugt unter 3, insbesondere bevorzugt unter 1, beispielsweise 0 bis 1 Gew.-% Aldehyd-Kondensationsharze. Beispiele für solche Aldehyd-Kondensationsharze sind insbesondere solche teil- oder vollalkylierten Aldehyd-Kondensationsharze, wie sie in der Lacktechnologie als Vernetzer für hydroxyfunktionelle Bindemittel üblich sind, beispielsweise Phenol-(Form)aldehyd-Kondensationsharze oder Aminoplastharze wie Harnstoff-(Form)aldehyd- oder Amm-(Form)aldehyd-Kondensationsharze (z.B. Melaminharze, Benzoguanaminharze).

Gemäß einer bevorzugten Ausführungsform enthalten die erfindungsgemäßen Klarlacküberzugsmittel einen Harzfestkörper aus
a) 50 bis 100 Gew.-% eines oder mehrerer Bindemittel,
b) 0 bis 20 Gew.-% eines oder mehrerer Reaktivverdünner und
c) 0 bis 50 Gew.-% eines oder mehrerer von Aldehyd-Kondensationsharzen unterschiedlicher Vernetzer, wobei sich die Summe von a), b) und c) auf 100 Gew.-% addiert und die Komponenten A) und B) zusätzlich zu den 100 Gew.-% in Mengen von 0,1 bis 3 Gew.-% A) und 0,05 bis 10 Gew.-% B) bezogen auf die Summe von a), b) und c) vorliegen.

Bevorzugt handelt es sich bei den erfindungsgemäßen Klarlacküberzugsmitteln um fremdvernetzende Systeme, in denen Bindemittel, gegebenenfalls enthaltene Reaktivverdünner und Vernetzer in einem dem angestrebten Vernetzungsgrad angepaßten stöchiometrischen Verhältnis von im allgemeinen 50 bis 90 Gew.-% Bindemittel, 0 bis 20 Gew.-% Reaktivverdünner und 50 bis 10 Gew.-% Vernetzer vorliegen, wobei die Summe 100 Gew.-% beträgt. Sowohl die Bindemittel als auch die Reaktivverdünner unterliegen keiner prinzipiellen Beschränkung.

Auch für die Auswahl der gegebenenfalls enthaltenen Vernetzer besteht keine Beschränkung, sie richtet sich nach der Funktionalität der Bindemittel, d.h. die Vernetzer werden so ausgewählt, daß sie eine zur Funktionalität der Bindemittel komplementäre, reaktive Funktionalität aufweisen. Dabei wird wie vorstehend ausgerührt die Verwendung von Aldehyd-Kondensationsharzen als Vernetzer im wesentlichen oder vollständig vermieden. Als filmbildende Bindemittel können beispielsweise Polyester-, Polyurethan- und/oder (Meth)acrylcopolymerharze verwendet werden. Bevorzugt sind die Bindemittel, insbesondere die Polyester- und Polyurethanharze, im wesentlichen frei von aromatischen Struktureinheiten und basieren auf aliphatischen und/oder cycloaliphatischen Bausteinen. Die (Meth)acrylcopolymerharze können aromatische Struktureinheiten, beispielsweise in Form einpolymerisierten Styrols enthalten. Die funktionellen Gruppen des selbst- oder bevorzugt fremdvernetzenden Systems können thermisch unter Addition und/oder Kondensation miteinander reagieren. Beispiele für zur Vernetzung der Systeme geeignete Additionsreaktionen sind die ringöffnende Addition einer Epoxidgruppe an eine Carboxylgruppe unter Bildung einer Ester- und einer Hydroxylgruppe, die Addition einer Hydroxylgruppe an eine Isocyanatgruppe unter Bildung einer Urethangruppe, die Michael-Addition einer CH-aciden Gruppe an eine (Meth)acryloylgruppe unter C-C-Verknüpfung. Beispiele für zur Vernetzung geeignete Kondensationsreaktionen sind die Reaktion einer Hydroxylgruppe mit einer blockierten Isocyanatgruppe unter Ausbildung einer Urethangruppe und Abspaltung des Blockierungsmittels, die Umesterungsreaktion einer Hydroxylgruppe mit einer Estergruppe unter Abspaltung des Veresterungsalkohols und die Umurethanisierungsreaktion einer Hydroxylgruppe mit einer Carbamatgruppe unter Alkoholabspaltung. Sofern miteinander verträglich, können auch mehrere komplementäre Funktionalitäten in einem thermisch durch Additions- und/oder Kondensationsreaktionen härtbaren System nebeneinander vorliegen, so daß zwei oder mehrere unterschiedliche der vorstehend beispielhaft genannten Reaktionstypen während des Einbrennens auftreten können. Die in den fremdvernetzenden Klarlacksystemen verwendeten Vernetzer können einzeln oder im Gemisch vorliegen.

Bevorzugt handelt es sich bei den erfindungsgemäßen Klarlacküberzugsmitteln um fremdvernetzende Klarlacküberzugsmittel auf der Basis hydroxyfunktioneller Bindemittel. Dabei kann es sich um einkomponentige Klarlacküberzugsmittel handeln, bevorzugt handelt es sich um zweikomponentige Klarlacküberzugsmittel.

Bevorzugte, erfindungsgemäße Einkomponentenklarlacke sind solche, die als Bindemittel hydroxyfunktionelle (Meth)acrylcopolymere, Polyesterharze und/oder Polyurethanharze einzeln oder im Gemisch und gegebenenfalls zusätzlich hydroxyfunktionelle Reaktivverdünner enthalten. Dabei sind bevorzugt als Vernetzer für die hydroxyfunktionellen Bindemittel und gegebenenfalls enthaltenen hydroxyfunktionellen Reaktivverdünner mit deren Hydroxylguppen unter Estergruppenbildung vernetzende Komponenten auf Triazinbasis und/oder Umesterungsvernetzer und/oder blockierte Polyisocyanate enthalten.

Bevorzugte, erfindungsgemäße Zweikomponentenklarlacke sind solche, die als Bindemittelkomponente hydroxyfunktionelle (Meth)acrylcopolymere, Polyesterharze und/oder Polyurethanharze einzeln oder im Gemisch und gegebenenfalls zusätzlich hydroxyfunktionelle Reaktivverdünner enthalten und als Vernetzerkomponente freie Polyisocyanate enthalten.

Bevorzugt weisen die Bindemittel ein Zahlenmittel der Molmasse (Mn) von 500 bis 10000 und eine Hydroxylzahl von 30 bis 450 mg KOH/g auf.

Beispiele für in den erfindungsgemäßen Klarlacküberzugsmitteln als bevorzugte Bindemittel einsetzbare hydroxyfunktionelle Polyesterharze sind übliche, beispielsweise solche mit einem Zahlenmittel der Molmasse (Mn) von 500 bis 5000, bevorzugt von 1000 bis 3000 und Hydroxylzahlen von 30 bis 450, bevorzugt von 50 bis 280 mg KOH/g.

Beispiele für in den erfindungsgemäßen Klarlacküberzugsmitteln als bevorzugte Bindemittel einsetzbare hydroxyfunktionelle Polyurethanharze sind übliche, beispielsweise solche mit einem Zahlenmittel der Molmasse (Mn) von 500 bis 5000, bevorzugt von 1000 bis 3000 und Hydroxylzahlen von 30 bis 450, bevorzugt von 50 bis 280 mg KOH/g.

Beispiele für in den erfindungsgemäßen Klarlacküberzugsmitteln als bevorzugte Bindemittel einsetzbare hydroxyfunktionelle (Meth)acryl-Copolymere sind übliche, beispielsweise solche mit einem Zahlenmittel der Molmasse (Mn) zwischen 1000 und 10000 und Hydroxylzahlen von 30 bis 300, bevorzugt von 50 bis 250 mg KOH/g. Die (Meth)acryl-Copolymeren können beispielsweise in Gegenwart von oligomeren oder polymeren Polyester- und/oder Polyurethanharzen, beispielsweise solchen wie in den beiden vorstehenden Absätzen erläutert, hergestellt worden sein.

Beispiele für in den erfindungsgemäßen Klarlacküberzugsmitteln einsetzbare flüssige hydroxyfunktionelle Reaktivverdünner sind niedrigmolekulare Verbindungen mit mindestens zwei Hydroxylgruppen pro Molekül und Hydroxylzahlen im Bereich von 250 bis 700 mg KOH/g. Geeignet sind oligomere oder polymere Polyole, wie Polyetherpolyole, Oligoesterpolyole, Polycarbonatpolyole und Oligourethanpolyole. Geeignet sind beispielsweise Handelsprodukte, wie durch Reaktion von Polyolen mit Caprolacton erhältliche Polycaprolactonpolyole, durch Reaktion von Oxiranverbindungen mit Polyolen und/oder Wasser erhältliche Polyetherpolyole wie z.B. Triethylenglykol, oder durch Reaktion von Polyaminen mit cyclischen Carbonaten erhältliche Oligourethanpolyole.

Beispiele für in den erfindungsgemäßen Klarlacküberzugsmitteln als Vernetzer für hydroxyfunktionelle Bindemittel plus gegebenenfalls Reaktivverdünner in freier oder blockierter Form einsetzbare Polyisocyanate sind cycloaliphatische oder aliphatische Diisocyanate wie Tetramethylendiisocyanat, 1,6-Hexamethylendiisocyanat, 1,12-Dodecandiisocyanat, Cyclohexan-1,3- und 1,4-diisocyanat, Isophorondiisocyanat, Biscyclohexylmethandiisocyanat oder deren Gemische.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Uretdiongruppen, Urethangruppen, acylierte Harnstoffgruppen und/oder Biuretgruppen aufweisende Polyisocyanate.

Besonders gut geeignet sind die bekannten Polyisocyanate, die üblicherweise bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret, das sich von Isophorondiisocyanat oder Hexandiisocyanat ableitende Isocyanurat oder niedermolekulare, Urethangruppen aufweisende Polyisocyanate, wie sie durch Umsetzung von im Überschuß eingesetzten Isophorondiisocyanat mit einfachen mehrwertigen Alkoholen des Molekulargewichtsbereiches 62 bis 300, insbesondere mit Trimethylolpropan erhalten werden können. Selbstverständlich können auch beliebige Gemische der genannten Polyisocyanate eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind.

Als Blockierungsmittel für die vorstehend beschriebenen Polyisocyanatvernetzer eignen sich die üblichen Blockierungsmittel, die unter den Reaktionsbedingungen bei der Vernetzung von Bindemittel und Härter abgespalten werden. Beispiele sind übliche CH-acide, NH-, SH- oder OH-funktionelle Blockierungsmittel. Diese können allein oder im Gemisch zur Blockierung eingesetzt werden. Beispiele sind CH-acide Verbindungen wie Acetylaceton oder CH-acide Ester, wie z.B. Acetessigsäurealkylester, Malonsäuredialkylester, aliphatische oder cycloaliphatische Alkohole, wie n-Butanol, Isopropanol, tert.-Butanol, Furfurol, 2-Ethylhexanol, Cyclohexanol; Oxime wie Methylethylketoxim, Acetonoxim, Cyclohexanonoxim, Acetophenonoxim, Lactame wie epsilon-Caprolactam oder Pyrrolidon-2, Imidazole wie 2-Methylimidazol, Pyrazole wie 2,3-Dimethylpyrazol. CH-acide Ester und/oder Oxime als Blockierungsmittel sind bevorzugt.

Beispiele für in den erfindungsgemäßen Klarlacküberzugsmitteln mit hydroxyfunktionellen Bindemitteln und zusätzlich gegebenenfalls enthaltenen Reaktivverdünnern unter Estergruppenbildung, insbesondere unter Bildung von Urethangruppen (Carbaminsäureestergruppen) vernetzende Komponenten auf Triazinbasis sind übliche Umesterungsvernetzer, wie beispielsweise bevorzugt Tris(alkoxycarbonylamino)triazin.

Besonders bevorzugte erfindungsgemäße Klarlacküberzugsmittel sind solche, deren Harzfestkörper aus einem fremdvernetzenden System besteht, welches hydroxyfunktionelles Bindemittel, insbesondere auf (Meth)acrylcopolymer-Basis und freies Polyisocyanat als Vernetzer enthält.

Die erfindungsgemäßen Klarlacküberzugsmittel weisen im applikationsfähigen Zustand einen Festkörpergehalt, gebildet aus dem Harzfestkörper, sowie weiteren nichtflüchtigen Bestandteilen, von 40 bis 70 Gew.-% auf. Als flüchtige Bestandteile enthalten sie organische Lösemittel, wie beispielsweise Glykolether, wie Butylglykol, Butyldiglykol, Dipropylenglykoldimethylether, Dipropylenglykolmonomethylether, Ethylenglykoldimethylether; Glykoletherester, wie Ethylglykolacetat, Butylglykolacetat, 3-Methoxy-n-butylacetat, Butyldiglykolacetat, Methoxypropylacetat; Ester, wie Butylacetat, Isobutylacetat, Amylacetat; Ketone, wie Methylethylketon, Methylisobutylketon, Diisobutylketon, Cyclohexanon, Isophoron; Alkohole, wie Methanol, Ethanol, Propanol, Butanol; aromatische Kohlenwasserstoffe, wie Xylol, Solvesso 100 (eingetragenes Warenzeichen für ein Gemisch aromatischer Kohlenwasserstoffe mit einem Siedebereich von 155 bis 185°C) und aliphatische Kohlenwasserstoffe.

Die erfindungsgemäßen Klarlacküberzugsmittel enthalten bezogen auf ihren Harzfestkörper 0,1 bis 3, bevorzugt 0,3 bis 2, besonders bevorzugt 0,5 bis 1,5 Gew.% einer oder mehrerer Harnstoffverbindungen (A) als Antiablaufmittel, d.h. als thixotropierend wirkende oder Strukturviskosität bewirkende Mittel, welche das Ablaufverhalten der Klarlacküberzugsmittel günstig beeinflußen. Sie verhindern das unerwünschte Ablaufen oder Absacken von aus den erfindungsgemäßen Klarlacküberzugsmitteln auf senkrechten Flächen aufgebrachten Klarlackschichten wirksam.

Bei den Harnstoffverbindungen (A) handelt es sich um als Antiablaufmittel beispielsweise aus den DE-C-27 51 761, EP-A-0 192 304 und EP-A-0 198 519 bekannte Harnstoffverbindungen, die in Einbrennklarlacken eingesetzt werden können. Bei Einbrennklarlacken tritt das Ablaufproblem insbesondere während des Einbrennprozesses durch eine anfängliche temperaturbedingte Viskositätserniedrigung in Erscheinung.

Bei den Harnstoffverbindungen (A) handelt es sich um Additionsprodukte aus aromatischen, araliphatischen, cycloaliphatischen oder aliphatischen Diisocyanaten und/oder davon abgeleiteten Polyisocyanaten (beispielsweise solche vom Isocyanurat-Typ) und Mono- und/oder Polyaminen mit primären und/oder sekundären Aminogruppen. Bei den Additionsprodukten kann es sich um definierte niedermolekulare Verbindungen oder oligomere oder polymere Additionsprodukte handeln. Bevorzugte Harnstoffverbindungen (A) sind solche, bei denen Polyisocyanat und Amin in einem stöchiometrischen Verhältnis von 0,7 - 1,5 primären und/oder sekundären Aminogruppen pro Isocyanatgruppe umgesetzt worden sind, besonders bevorzugt in einem stöchiometrischen Verhältnis von Aminogruppen zu Isocyanatgruppen von 1 : 1. Besonders bevorzugt werden als Harnstoffverbindungen (A) Additionsprodukte aus Diisocyanaten, bevorzugt aus aliphatischen oder cycloaliphatischen Diisocyanaten und primären Aminen, bevorzugt primären Monoaminen eingesetzt. Bevorzugt handelt es sich bei den aliphatischen oder cycloaliphatischen Diisocyanaten um symmetrisch aufgebaute Diisocyanate.

Die in den erfindungsgemäßen Klarlacküberzugsmitteln eingesetzten Harnstoffverbindungen (A) werden bevorzugt so ausgewählt, daß es sich um feste, besonders bevorzugt kristalline Stoffe handelt, da diese eine besonders hohe Wirksamkeit als Antiablaufmittel haben. Die Teilchengrößen der (A)-Teilchen liegen bevorzugt bei 0,1 bis 20 µm. Bevorzugt besitzen die festen oder kristallinen Harnstoffverbindungen (A) einen hohen Erstarrungs- oder Schmelzpunkt, der insbesondere oberhalb der beim Einbrennen der erfindungsgemäßen Klarlacküberzugsmittel herrschenden Einbrenntemperaturen liegt, insbesondere über 80°C, beispielsweise zwischen 80 und 250°C. Besonders bevorzugt wird das aus 1 mol 1,6-Hexandiisocyanat und 2 mol Benzylamin gebildete Addukt als Harnstoffverbindung (A) in den erfindungsgemäßen Klarlacküberzugsmitteln eingesetzt.

Die Harnstoffverbindungen (A) können in üblicher Weise hergestellt werden durch Addition von Aminen mit primären und/oder sekundären Aminogruppen an Polyisocyanate. Dabei kann Amin zum Polyisocyanat oder Polyisocyanat zum Amin zugegeben werden, oder die Reaktanden werden simultan zugegeben, bevorzugt ist die Zugabe des Polyisocyanats zum Amin. Die Herstellung erfolgt beispielsweise bei Temperaturen zwischen 20 und 80°C beispielsweise lösemittelfrei in Substanz, bevorzugt in einem inerten Lösungsmittel oder besonders bevorzugt in Gegenwart von unter den Reaktionsbedingungen inertem Bindemittel oder Vernetzer, beispielsweise einer inerten Bindemittel- oder Vernetzerlösung. Zweckmäßig ist dabei eine gute Durchmischung des Reaktionssystems, beispielsweise durch kräftiges Rühren. Soll die Herstellung entsprechend der besonders bevorzugten Verfahrensweise in Gegenwart von inertem Bindemittel oder Vernetzer erfolgen, so kann dies in Gegenwart eines Teils oder des oder der gesamten im Klarlacküberzugsmittel vorhandenen Bindemittel oder Vernetzer erfolgen. Enthält das Klarlacküberzugsmittel mehr als ein Bindemittel bzw. mehr als einen Vernetzer, kann die Herstellung beispielsweise in einem dieser Bindemittel oder in einem dieser Vernetzer erfolgen. Wesentlich ist, daß die Bindemittel oder Vernetzer, welche als Reaktionsmedium für die Herstellung der Harnstoffverbindungen (A) verwendet werden, gegenüber den Reaktanden inert sind, d.h. unter den herrschenden Herstellungsbedingungen bevorzugt weder mit dem Amin noch mit dem Polyisocyanat reagieren oder in ihrer Reaktionsfähigkeit gegenüber diesen Reaktanden so gering sind, daß die Reaklanden praktisch nur miteinander, also vollständig zur gewünschten Harnstoffverbindung (A) reagieren. Bevorzugt wird so gearbeitet, daß die gebildeten Harnstoffverbindungen (A) im Bindemittel bzw. der Bindemittellösung oder dem Vernetzer bzw, der Vernetzerlösung als feinverteilter Feststoff ausfallen oder auskristallisieren, beispielsweise während oder nach Beendigung der Additionsreaktion, beispielsweise beim oder nach dem Abkühlen. Solche Dispersionen von als fein verteilter, bevorzugt kristalliner Feststoff in der Bindemittel(lösung) oder Vernetzer(lösung) vorliegenden Harnstoffverbindungen (A) können auch hergestellt werden durch Aufschmelzen und feines Verteilen der Harnstoffverbindungen (A) in der Bindemittel(lösung) oder Vernetzer(lösung) und anschliessendes Abkühlen unter den Erstarrungs- oder Schmelzpunkt der Harnstoffverbindungen (A). Diese Verfahrensweise bietet sich beispielsweise an, wenn Bindemittel(lösungen) oder Vernetzer(lösungen) verwendet werden sollen, die nicht inert im vorstehend erläuterten Sinne sind.

Die Herstellung der Klarlacküberzugsmittel erfolgt bevorzugt so, daß die Harnstoffverbindungen (A) bevorzugt als Zubereitung, beispielsweise als Dispersion in einem Lösemittel oder besonders bevorzugt als Dispersion in z.B. einem Teil des flüssigen oder gelösten Bindemittels oder Vernetzers, mit den übrigen Bestandteilen des Klarlacküberzugsmittels vermischt werden. Beispielsweise wird zunächst mit dem übrigen Bindemittel vermischt, bevor die weiteren Bestandteile hinzugemischt werden. Enthalten die erfindungsgemäßen Klarlacküberzugsmittel dabei mehr als ein Bindemittel, so ist es möglich, daß die Harnstoffverbindungen (A) in einem Bindemittel vorliegen, dessen funktionelle Gruppen sich von den funktionellen Gruppen des oder der weiteren damit zu vermischenden Bindemittel unterscheiden. Bevorzugt ist es jedoch, daß die funktionellen Gruppen der Bindemittel gleich sind, wenn die erfindungsgemäßen Klarlacküberzugsmittel mehr als ein Bindemittel enthalten.

Weitere Details zu den in den erfindungsgemäßen Klarlacküberzugsmitteln verwendbaren Harnstoffverbindungen (A), Ausgangsstoffen, Verfahren und Verfahrensparametern zur Herstellung der Harnstoffverbindungen (A) und ihre Einarbeitung in Überzugsmittel sind den DE-C-27 51 761, EP-A-0 192 304 und EP-A-0 198 519 zu entnehmen, auf welche hier ausdrücklich, jedoch nicht ausschließlich Bezug genommen wird.

Die erfindungsgemäßen Klarlacküberzugsmittel enthalten bezogen auf ihren Harzfestkörper 0,05 bis 10 Gew.-% einer oder mehrerer Formaldehyd liefernder Substanzen (B), wobei die Obergrenze bevorzugt bei 5 oder 3 und die Untergrenze bevorzugt bei 0,1 Gew.-% liegt. Diese Substanzen geben spätestens beim Einbrennen der aus den Klarlacküberzugsmitteln erstellten Klarlackschichten Formaldehyd ab. Insbesondere ist es dabei bevorzugt, wenn die erfindungsgemäßen Klarlacküberzugsmittel bezogen auf ihren Gehalt an Komponente (A) 10 bis 1000, bevorzugt 30 bis 500 Gew.-% einer oder mehrerer solcher Substanzen (B) enthalten. Überraschenderweise wird die Aufgabe der Erfindung gelöst, wenn die erfindungsgemäßen Klarlacküberzugsmittel nur kleine Mengen der Formaldehyd liefernden Substanzen (B) enthalten. Dies ist aus zweierlei Gründen überraschend. Zum einen ist nicht bekannt, ob die theoretisch mögliche Ausbeute bei der Lieferung des Formaldehyds aus (B) erreicht wird. Zum zweiten ist es insbesondere überraschend, daß die kleinen Mengen der Formaldehyd liefernden Substanzen (B) in den erfindungsgemäßen Klarlacküberzugsmitteln ausreichend sind, da ein großer Anteil des gelieferten Formaldehyds aufgrund der großen Oberfläche der aus den erfindungsgemäßen Klarlacküberzugsmitteln applizierten dünnen Klarlackschichten als Gas entweichen kann.

Bei den spätestens beim Einbrennen der aus den Klarlacküberzugsmitteln erstellten Klarlackschichten Formaldehyd liefernden Substanzen (B) handelt es sich um definierte niedermolekulare, oder oligomere oder polymere Verbindungen, die geeignet sind unter den vor oder nach der Applikation der erfindungsgemäßen Klarlacküberzugsmittel oder spätestens beim Einbrennen der aus den erfindungsgemäßen Klarlacküberzugsmitteln erstellten Klarlackschichten herrschenden Bedingungen Formaldehyd zu liefern. Bevorzugt liefern sie den Formaldehyd erst beim Einbrennen, d.h. unter den während des Einbrennens herrschenden Bedingungen. Lieferung von Formaldehyd aus den Substanzen (B) unter den vor oder nach der Applikation der erfindungsgemäßen Klarlacküberzugsmittel oder spätestens beim Einbrennen der aus den erfindungsgemäßen Klarlacküberzugsmitteln erstellten Klarlackschichten herrschenden Bedingungen bedeutet, daß die Substanzen (B) als solche freien Formaldehyd, beispielsweise als Verunreinigung, enthalten und/oder daß sie dann Formaldehyd freisetzen oder daß dann Formaldehyd aus Reaktionsprodukten, die sich zuvor aus (B) und anderen von (B) verschiedenen Bestandteilen der erfindungsgemäßen Klarlacküberzugsmittel oder durch Hydrolyse von (B) gebildet haben, freigesetzt wird. Wenn (B) freien Formaldehyd enthält, so beträgt der Gehalt an freiem Formaldehyd bevorzugt unter 1 Gew.-%, bezogen auf (B). Die Formaldehyd liefernden Substanzen (B) können in den erfindungsgemäßen Klarlacküberzugsmitteln gelöst oder fein dispergiert vorliegen.

Bevorzugt liefern die Substanzen (B) Formaldehyd erst bei erhöhten Temperaturen, insbesondere erst bei den beim Einbrennen der aus den erfindungsgemäßen Überzugsmitteln erstellten Klarlacküberzugsschichten herrschenden Temperaturen. Dabei können die Substanzen (B) als solche Formaldehyd abspalten oder sie setzen Formaldehyd frei bei der Reaktion mit weiteren Bestandteilen der erfindungsgemäßen Klarlacküberzugsmittel oder mit Wasser infolge Hydrolyse. Dabei kann das Wasser in Form von Luftfeuchtigkeit hinzutreten oder als Wasserspuren aus dem erfindungsgemäßen Klarlacküberzugsmittel oder aus zuvor applizierten, unter der Klarlackschicht befindlichen Lackschichten herrühren. Es kann auch zunächst zur Bildung von Zwischenprodukten kommen, aus denen anschließend Formaldehyd freigesetzt wird. Es kann zweckmäßig sein, die letztendlich zur Freisetzung von Formaldehyd führenden Reaktionen oder Reaktionssequenzen zu katalysieren. Beispiele für katalytisch wirksame Substanzen sind insbesondere Säuren. Bei den Säuren kann es sich um saure Gruppen der Bindemittel bzw. Vernetzer handeln oder es handelt sich um den erfindungsgemäßen Klarlacküberzugsmitteln speziell zugesetzte Säuren, beispielsweise lackübliche Säurekatalysatoren, wie beispielsweise Phosphorsäure, saure Organophosphate oder insbesondere aromatische Sulfonsäuren. In der Regel, insbesondere bei der Verwendung starker Säuren ist es zweckmäßig die Säurekatalysatoren in blockierter Form, beispielsweise mit Amin blockiert, einzusetzen. Daraus kann die Säure thermisch wieder freigesetzt werden.

Die Substanzen (B) können allein oder im Gemisch, gegebenenfalls auch als spezielle zuvor hergestellte Zubereitung, beispielsweise im Gemisch mit anderen Substanzen, die keine Formaldehydlieferanten sind, in den erfindungsgemäßen Klarlacküberzugsmitteln eingesetzt werden. Insbesondere handelt es sich bei den Substanzen (B) um Verbindungen mit einer oder mehreren Formal-, Hemiformal-, von Formaldehyd abgeleiteten Aminal- und/oder von Formaldehyd abgeleiteten Halbaminal-Struktureinheiten, wobei diese Struktureinheiten Bestandteile heterocyclischer Ringsysteme sein können. Beispiele für Substanzen mit derartigen Struktureinheiten sind Paraformaldehyd, Polyoxymethylenglykole, Urotropin, in 2-Stellung unsubstituierte 1,3-Oxazolidine, in 2-Stellung unsubstituierte 1,3-Dioxolane, Additionsprodukte von Alkoholen an Formaldehyd wie Glycerinformal, Benzylalkoholmonohemiformal, Benzylalkoholpolyhemiformal, N-Methylol-Gruppen aufweisende Verbindungen, N-Methylolether-Gruppen aufweisende Verbindungen, N-Methylol-Gruppen und/oder N-Methylolether-Gruppen aufweisende (Meth)acrylcopolymerisate. Es können auch teil- oder vollalkylierte Formaldehyd-Kondensationsharze, wie sie in der Lacktechnologie als Vernetzer für hydroxyfunktionelle Bindemittel üblich sind, beispielsweise Phenol-Formaldehyd-Kondensationsharze oder Aminoplastharze wie Harnstoff-Formaldehyd- oder Amin-Formaldehyd-Kondensationsharze, z.B. Melaminharze oder Benzoguanaminharze, eingesetzt werden, diese insbesondere in einer Menge von weniger als 5 Gew.-%, bezogen auf den Harzfestkörper der Klarlacküberzugsmittel.

Weiterhin können die erfindungsgemäßen Klarlacküberzugsmittel lackübliche Additive in lacküblichen Mengen, beispielsweise bis zu 5 Gew.-% bezogen auf den gesamten Lack, enthalten, z.B. transparente Pigmente oder Füllstoffe, Verlaufsmittel, Farbstoffe, Lichtschutzmittel, Antioxidantien oder weitere, neben den Harnstoffverbindungen (A) verwendbare Rheologiesteuerer, wie Mikrogele, NAD (= non-aqueous-dispersions).

Die erfindungsgemäßen Klarlacküberzugsmittel können zur Herstellung der äußeren Klarlackschicht einer Mehrschichtlackierung verwendet werden. Insofern betrifft die vorliegende Erfindung auch die Verwendung der erfindungsgemäßen Klarlacküberzugsmittel. Beispielsweise kann das erfindungsgemäße Klarlacküberzugsmittel auf ein mit einer farb- und/oder effektgebenden ein- oder mehrschichtigen Vorbeschichtung versehenes Substrat aufgetragen und eingebrannt werden. Die Einbrenntemperaturen der erfindungsgemäßen Klarlacküberzugsmittel liegen beispielsweise zwischen 60 und 160°C. Für Automobilanwendungen liegen sie beispielsweise zwischen 60 und 140, für Anwendungen in der Automobilserienlackierung insbesondere zwischen 80 und 140 und bevorzugt zwischen 110 und 130°C.

Ein weiterer Gegenstand der vorliegenden Erfindung ist ein Verfahren zur Herstellung einer Mehrschichtlackierung durch Auftrag und Einbrennen einer Klarlacküberzugsschicht aus einem erfindungsgemäßen Klarlacküberzugsmittel auf ein mit einer farb- und/oder effektgebenden ein- oder mehrschichtigen Vorbeschichtung versehenes Substrat.

Bevorzugt handelt es sich um ein Verfahren zur Herstellung einer Basislack/Klarlack-Mehrschichtlackierung durch Auftrag und Einbrennen einer Klarlacküberzugsschicht aus einem erfindungsgemäßen Klarlacküberzugsmittel auf ein mit einer farb- und/oder effektgebenden Basislackschicht versehenes Substrat. Dabei erfolgt der Auftrag einer farb- und/oder effektgebenden Basislackschicht auf ein gegebenenfalls vorbeschichtetes Substrat, insbesondere auf vorbeschichtete Automobilkarossen oder deren Teile. Beispiele für Vorbeschichtungen auf Automobilkarossen oder deren Teilen sind eine Elektrotauchgrundierungsschicht, eine zweischichtige Vorbeschichtung bestehend aus einer Elektrotauchgrundierungsschicht und einer Spritzfüllerschicht oder eine zweischichtige Vorbeschichtung bestehend aus einer Elektrotauchgrundierungsschicht und einer zweiten elektrophoretisch aufgebrachten Überzugsschicht.

Die farb- und/oder effektgebende Basislackschicht kann vor Auftrag der Klarlackschicht aus dem erfindungsgemäßen Klarlacküberzugsmittel eingebrannt werden, bevorzugt jedoch wird das erfindungsgemäße Klarlacküberzugsmittel nach dem bekannten Naß-in-Naß-Verfahren auf die den Farbton der Mehrschichtlackierung bestimmende Basislackschicht aufgetragen. Dabei erfolgt der Auftrag der Basislackschicht durch Spritzen aus einem farb- und/oder effektgebenden wäßrigen oder lösemittelbasierenden Basislack in einer vom Farbton abhängigen Trockenschichtdicke, beispielsweise zwischen 10 bis 25 µm. Im Anschluß an die Applikation der Basislackschicht erfolgt nach einer kurzen Ablüftphase, z.B. bei 20 bis 80°C, der Auftrag der Klarlackschicht aus dem erfindungsgemäßen Klarlacküberzugsmittel durch Spritzen in einer Trockenschichtdicke von im allgemeinen zwischen 25 und 50 µm. Gegebenfalls kann kurz abgelüftet werden. Oftmals ist es zweckmäßig und bevorzugt, das Ablüften durch Erwärmen, beispielsweise bevorzugt unter Zuhilfenahme von Infrarotbestrahlung zu unterstützen. Danach wird das Substrat dem Einbrennprozeß zugeführt, bei dem die Klarlacküberzugsschicht gemeinsam mit der Basislackschicht bei erhöhten Temperaturen beispielsweise von 80 bis 160°C eingebrannt wird.

Mit der vorliegenden Erfindung lassen sich Mehrschichtlackierungen, insbesondere Basislack/Klarlack-Zweischichtlackierungen, insbesondere auf Kraftfahrzeugen und deren Teilen mit hervorragendem optisch-ästhetischem Eindruck und guter Säurefestigkeit herstellen. Ein Ablaufen des Klarlacks an senkrechten Flächen während des Aushärtens, insbesondere des Einbrennens wird wirksam verhindert. Die aus den erfindungsgemäßen Einbrennklarlacken erzeugten Klarlackschichten sind brilliant und trübungsfrei.

### Herstellung von Mehrschichtlackierungen

### Vergleichsbeispiel A

Zunächst wird in üblicher Weise durch Vermischen einer Acrylatharzlösung mit Additiven und Lösemitteln ein Stammlack mit folgender Zusammensetzung hergestellt:
42 Teile Acrylatfestharz (Hydroxylzahl 140 mg KOH/g)
1 Teil Lichtschutzmittel (Benztriazolderivat)
1 Teil Lichtschutzmittel (HALS-Derivat, HALS = hindered amine light stabiliser)
0,2 Teile handelsübliches Silikonöl als Verlaufsmittel (berechnet als Wirksubstanz)
55,8 Teile eines Gemischs organischer Lösemittel.

Durch Vermischen von 100 Teilen des Stammlacks mit 30 Teilen einer Härterlösung, bestehend aus 24,6 Teilen Triisocyanat (Hexamethylendiisocyanat-Isocyanurat) und 5,4 Teilen Butylacetat wird ein Klarlack hergestellt.

Auf ein mit einer Kataphoresegrundierung und Füllerschicht versehenes Blech wird ein schwarzer Uniwasserbasislack in einer Trockenschichtdicke von 16 µm aufgespritzt und 10 Minuten bei 80°C vorgetrocknet. Dann wird der vorstehend beschriebene Klarlack keilförmig auf das hängende Blech aufgespritzt mit einem Schichtdickegradienten von 10 bis 70 µm Trockenschichtdicke. Nach 10 Minuten Ablüften bei Raumtemperatur wird 20 Minuten bei 140°C (Objekttemperatur) eingebrannt. Das Blech befindet sich bei allen Operationen in der senkrechten Position.

### Vergleichsbeispiel B

Zunächst wird ein Stammlack mit gleichem Gewichtsfestkörper wie in Vergleichsbeispiel A bereitgestellt. Im Unterschied zu Vergleichsbeispiel A wird ein Teil der dort eingesetzetn Acrylatharzlösung ersetzt durch eine modifizierte Acrylatharzlösung. Die modifizierte Acrylatharzlösung enthält ein darin in fester Form suspendiertes Diharnstoff-Derivat.

Zusammensetzung des Stammlacks:
31 Teile des Acrylatfestharzes aus Vergleichsbeispiel A (Hydroxylzahl 140 mg KOH/g)
10,3 Teile eines weiteren Acrylatfestharzes (Hydroxylzahl 140 mg KOH/g)
0,7 Teile Diharnstoff-Derivat (Additionsprodukt von 2 mol Benzylamin an 1 mol Hexamethylendiisocyanat)
1 Teil Lichtschutzmittel (Benztriazolderivat)
1 Teil Lichtschutzmittel (HALS-Derivat, HALS = hindered amine light stabiliser)
0,2 Teile gleiches Silikonöl wie im Vergleichsbeispiel A (berechnet als Wirksubstanz),
55,8 Teile eines Gemischs organischer Lösemittel, wie im Vergleichsbeispiel A.

Klarlackherstellung und Herstellung der Mehrschichtlackierung erfolgen analog zu Vergleichsbeispiel A.

### Beispiel 1 (erfindungsgemäßes Beispiel)

Im Unterschied zu Vergleichsbeispiel B werden 130 Teile des Klarlacks vor der Applikation mit einem Teil Maprenal MF 590 (55 gew.-%ige Lösung eines Melaminharzes, isobutyliert, Hersteller: Vianova Resins) und 0,3 Teilen Nacure 5225 (geblockte aromatische Sulfonsäure, Hersteller: King Industries) vermischt. Der Gehalt an Melaminharz, bezogen auf den Harzfestkörpergehalt beträgt 0,8 Gew.-%. Der Gehalt an Harnstoff beträgt 1,0 Gew.-%, bezogen auf den Harzfestkörpergehalt.

### Beispiel 2 (erfindungsgemäßes Beispiel)

Im Unterschied zu Vergleichsbeispiel B werden 130 Teile des Klarlacks vor der Applikation mit einem Teil Preventol D2 (Benzylhemiformal, Hersteller: Bayer) und 0,3 Teilen Nacure 5225 vermischt. Der Gehalt an Benzylhemiformal, bezogen auf den Harzfestkörpergehalt beträgt 1,5 Gew.-%. Der Gehalt an Harnstoff beträgt 1,0 Gew.-%, bezogen auf den Harzfestkörpergehalt.

Die Beständigkeit der in den Vergleichsversuchen A und B und den Beispielen 1 und 2 erhaltenen Überzüge gegenüber Schwefelsäure war in Ordnung und wies keine Unterschiede auf. Tabelle 1 stellt die Unterschiede der erhaltenen Mehrschichtlackierungen zusammen.

**Tabelle 1**

| | |
|---|---|
| Vergleich A | 35 µm Klarlackläufergrenze |
| Vergleich B | 45 µm Klarlackläufergrenze, deutlich sichtbarer Schleier, milchig |
| erfindungsgemäßes Beispiel 1 | 50 µm Klarlackläufergrenze, klar, brillant |
| erfindungsgemäßes Beispiel 2 | 47 µm Klarlackläufergrenze, klar, brillant |

## Patentansprüche

1. Klarlacküberzugsmittel, enthaltend ein oder mehrere selbstvernetzende oder fremdvernetzende Bindemittel, ein oder mehrere organische Lösemittel, im Falle von fremdvernetzenden Bindemitteln einen oder mehrere von Aldehyd-Kondensationsharzen unterschiedliche Vernetzer, sowie gegebenenfalls einen oder mehrere Reaktivverdünner, sowie gegebenenfalls für Klarlacke übliche Additive, **gekennzeichnet durch** den zusätzlichen Gehalt von
A) 0,1 bis 3 Gew.-% einer oder mehrerer Harnstoffverbindungen und
B) 0,05 bis 10 Gew.-% einer oder mehrerer Formaldehyd liefernden Substanzen
jeweils bezogen auf den **durch** Bindemittel und gegebenenfalls vorhandenen Reaktivverdünner und gegebenenfalls vorhandenen Vernetzer gebildeten Harzfestkörper der Klarlacküberzugsmittel.

2. Klarlacküberzugsmittel nach Anspruch 1, **dadurch gekennzeichnet, daß** es sich bei den Harnstoffverbindungen A) um Additionsprodukte von Di- und/oder Polyisocyanaten und Mono- und/oder Polyaminen mit primären und/oder sekundären Aminogruppen handelt.

3. Klarlacküberzugsmittel nach einem der Ansprüche 1 und 2, **dadurch gekennzeichnet, daß** die Harnstoffverbindungen in kristalliner Form mit Teilchengrößen von 0,1 bis 20 µm vorliegen.

4. Klarlacküberzugsmittel nach einem der Ansprüche 1 bis 3, **dadurch gekennzeichnet, daß** die Formaldehyd liefernde Substanz B) Formaldehyd erst beim Einbrennen des Klarlacküberzugsmittels liefert.

5. Klarlacküberzugsmittel nach einem der Ansprüche 1 bis 4, **dadurch gekennzeichnet, daß** es sich bei den Formaldehyd liefernden Substanzen B) um Verbindungen mit einer oder mehreren Formalgruppen, Hemiformalgruppen, von Formaldehyd abgeleiteten Aminal- und/oder Halbaminal-Struktureinheiten handelt.

6. Klarlacküberzugsmittel nach einem der Ansprüche 1 bis 5, **dadurch gekennzeichnet, daß** sie einen Harzfestkörper aus
a) 50 bis 100 Gew.-% eines oder mehrerer Bindemittel,
b) 0 bis 20 Gew.-% eines oder mehrerer Reaktivverdünner und
c) 0 bis 50 Gew.-% eines oder mehrerer von Aldehyd-Kondensationsharzen unterschiedlicher Vernetzer enthalten, wobei sich die Summe von a), b) und c) auf 100 Gew.-% addiert und die Komponenten A) und B) zusätzlich zu den 100 Gew.-% in Mengen von 0,1 bis 3 Gew.-% A) und 0,05 bis 10 Gew.-% B) bezogen auf die Summe von a), b) und c) vorliegen.

7. Klarlacküberzugsmittel nach Anspruch 6, **dadurch gekennzeichnet, daß** es
a) 50 bis 90 Gew.-% Bindemittel,
b) 0 bis 20 Gew.-% Reaktivverdünner und
c) 50 bis 10 Gew.-% Vernetzer enthält.

8. Verfahren zur Mehrschichtlackierung durch Auftrag einer Basislackschicht und einer Klarlackschicht auf ein gegebenenfalls vorbeschichtetes Substrat, **dadurch gekennzeichnet, daß** zur Herstellung der Klarlackschicht ein Überzugsmittel gemäß einem der Ansprüche 1 bis 7 aufgetragen wird.

9. Verwendung der Klarlacküberzugsmittel gemäß einem der Ansprüche 1 bis 7 bei der Herstellung von Mehrschichtlackierungen.

10. Verwendung der Klarlacküberzugsmittel nach Anspruch 9 zur Herstellung von Mehrschichtlackierungen auf dem Kraftfahrzeugsektor.

11. Verwendung von
A) 0,1 bis 3 Gew.-% einer oder mehrerer Harnstoffverbindungen und
B) 0,05 bis 10 Gew.-% einer oder mehrerer Formaldehyd liefernden Substanzen
als Additive zu Klarlacküberzugsmitteln, die ein oder mehrere selbstvernetzende oder fremdvernetzende Bindemittel, ein oder mehrere organische Lösemittel, im Falle von fremdvernetzenden Bindemitteln einen oder mehrere von Aldehyd-Kondensationsharzen unterschiedliche Vernetzer, sowie gegebenenfalls für Klarlacke übliche Additive enthalten,
wobei sich der Anteil der Harnstoffverbindungen und der "Formaldehyd liefernden Substanzen" auf den durch Bindemittel und gegebenenfalls vorhandenen Reaktivverdünner und gegebenenfalls vorhandenen Vernetzer gebildeten Harzfestkörper der Klarlacküberzugsmittel bezieht.

## Claims

1. Clear lacquer coating media containing one or more self-crosslinking or externally crosslinking binders, one or more organic solvents, in the case of externally-crosslinkable binders containing one or more crosslinking agents which are different from aldehyde condensation resins, optionally also containing one or more reactive thinners, and optionally also containing customary additives for clear lacquers, **characterised by** an additional content of
A) 0.1 to 3% by weight of one or more urea compounds, and
B) 0.05 to 10% by weight of one or more substances which supply formaldehyde,
with respect in each case to the resin solids content of the clear lacquer coating media which is formed by the binders and by the reactive thinners which are optionally present and by the crosslinking agents which are optionally present.

2. Clear lacquer coating media according to claim 1, **characterised in that** urea compounds A) are addition products of di- and/or polyisocyanates and mono- and/or polyamines which contain primary and/or secondary amino groups.

3. Clear lacquer coating media according to claim 1 and 2, **characterised in that** the urea compounds are present in crystalline form with particle sizes of 0.1 to 20 µm.

4. Clear lacquer coating media according to any of claims 1 to 3, **characterised in that** the substance B) which supplies formaldehyde does not supply formaldehyde until the clear lacquer coating medium is stoved.

5. Clear lacquer coating media according to any of claims 1 to 4, **characterised in that** substances B) which supply formaldehyde are compounds comprising one or more formal groups, hemiformal groups, aminal and/or semiaminal structural units derived from formaldehyde.

6. Clear lacquer coating media according to any of claims 1 to 5, **characterised in that** they have a resin solids content comprising
a) 50 to 100% by weight of one or more binders,
b) 0 to 20% by weight of one or more reactive thinners and
c) 0 to 50% by weight of one or more crosslinking agents which are different from aldehyde condensation resins, wherein the sum of a), b) and c) adds up to 100% by weight and components A) and B) are present in addition to said 100% by weight in amounts of 0.1 to 3% by weight A) and 0.05 to 10% by weight B) with respect to the sum of a), b) and c).

7. Clear lacquer coating medium according to claim 6, **characterised in that** it contains
a) 50 to 90% by weight binders,
b) 0 to 20% by weight reactive thinners and
c) 50 to 10% by weight crosslinking agents.

8. Method of multi-layer coating by the application of a base lacquer coat and a clear lacquer coat to a substrate which is optionally pre-coated, **characterised in that** a coating medium according to any of claims 1 to 7 is applied to produce the clear lacquer coat.

9. Use of the clear lacquer coating media according to any of claims 1 to 7 in the production of multi-layer coatings.

10. Use of the clear lacquer coating media according to claim 9 for the production of multi-layer coatings in the automotive sector.

11. Use of
A) 0.1 to 3% by weight of one or more urea compounds, and
B) 0.05 to 10% by weight of one or more substances which supply formaldehyde
as additives for clear lacquer coating media containing one or more self-crosslinking or externally crosslinking binders, one or more organic solvents, the externally-crosslinking binders containing one or more cross-linking agents which are different from aldehyde condensation resins, and optionally also containing customary additives for clear lacquers,
the content of the urea compounds and of the "substances which supply formaldehyde" being given with respect to resin solids content of the clear lacquer coating media which is formed by the binders and by the reactive thinners which are optionally present and by the crosslinking agents which are optionally present.

## Revendications

1. Enduit de laque transparente, contenant un ou plusieurs liants autoréticulants ou à réticulation extérieure, un ou plusieurs solvants organiques, dans le cas d'un liant à réticulation extérieure, un ou plusieurs agents de réticulation différents de résines de condensation d'aldéhyde, ainsi que le cas échéant, un ou plusieurs diluants réactifs, ainsi que le cas échéant, les additifs usuels pour laque transparente, **caractérisé par** la teneur supplémentaire en
A) 0,1 à 3% en poids d'un ou de plusieurs composés urée, et
B) 0,05 à 10% en poids d'une ou de plusieurs substances génératrices de formaldéhyde,
chaque fois sur base du corps solide résineux de l'enduit de laque transparente, formé par le liant et les diluants réactifs le cas échéant présents et les agents de réticulation le cas échéant présents.

2. Enduit de laque transparente selon la revendication 1, **caractérisé en ce que** les composés urée A) consistent en les produits d'addition de di-et/ou polyisocyanates et de mono- et/ou polyamines avec des radicaux amino primaires et/ou secondaires.

3. Enduit de laque transparente selon la revendication 1 ou 2, **caractérisé en ce que** les composés urée sont présents sous forme cristalline de taille de particules allant de 0,1 à 20 µm.

4. Enduit de laque transparente selon l'une quelconque des revendications 1 à 3, **caractérisé en ce que** la substance génératrice de formaldéhyde B) génère le forinaldéhyde lors de la cuisson de l'enduit de laque transparente.

5. Enduit de laque transparente selon l'une quelconque des revendications 1 à 4, **caractérisé en ce que** la substance génératrice de formaldéhyde B) consisté en des composés avec un ou plusieurs radicaux formai, radicaux hémiforinal, unités dé structure aminal et/ou hemiaminal dérivées du formaldéhyde.

6. Enduit de laque transparente selon l'une quelconque des revendications 1 à 5, **caractérisé en ce qu'**il contient un corps solide résineux constitué de
a) 50 à 100% en poids d'un ou de plusieurs liants,
b) 0 à 20% en poids d'une ou de plusieurs diluants réactifs, et
c) 0 à 50% en poids d'un ou de plusieurs agents de réticulation différents de résines de condensation d'aldéhyde, où la somme de a), b) et c) s'additionne à 100% en poids et les composants A) et B) sont présents, en plus dès 100% en poids, en des quantités allant de 0,1 à 3% en poids de A) et de 0,05 à 10% en poids de B), sur base de la somme de a), b) et c).

7. Enduit de laque transparente selon la revendication 6, **caractérisé en ce qu'**il contient
a) 50 à 90% en poids de liants,
b) 0 à 20% de diluants réactifs, et
c) 50 à 10% en poids d'agents de réticulation.

8. Procédé de peintures multicouches par application d'une couche de laque de base et d'une couche de laque transparente sur un substrat le cas échéant prérevêtu, **caractérisé en ce que** pour la préparation de la couche de laque transparente, on applique un enduit selon l'une quelconque des revendications 1 à 7.

9. Utilisation de l'enduit de laque transparente selon l'une quelconque des revendications 1 à 7, pour la préparation de peintures multicouches.

10. Utilisation de l'enduit de laque transparente selon la revendication 9, pour la préparation de peintures multicouches pour le secteur des véhicules automobiles.

11. Utilisation de
A) 0,1 à 3% en poids d'un ou de plusieurs composés urée, et
B) 0,05 à 10% en poids d'une ou de plusieurs substances génératrices de formaldéhyde,
comme additifs pour des enduits de laque transparente, qui contiennent un ou plusieurs liants autoréticulants ou à réticulation extérieure, un ou plusieurs solvants organiques, dans le cas d'un liant à réticulation extérieure, un ou plusieurs agents de réticulation différents de résines de condensation d'aldéhyde, ainsi que le cas échéant, les additifs usuels pour laque transparente,
où la proportion des composés urée et des « substances génératrices de formaldéhyde » repose sur le corps solide résineux de l'enduit de laque transparente, formé par le liant, le diluant réactif le cas échéant présent, et l'agent de réticulation le cas échéant présent.
